# DEMANDE DE BREVET EUROPEEN

(11) **EP 3 869 649 A1**
(43) Date de publication de la demande: **25.08.2021**
(21) Numéro de dépôt: 21158083.2
(22) Date de dépôt: 19.02.2021
(51) Int. Cl.: H02G 3/30, H02G 3/04, H02G 3/00, H02G 3/32, F16L 3/24

(54) **DISPOSITIF DE MAINTIEN, ENSEMBLE ET PROCÉDÉ DE FIXATION ASSOCIÉS**

(30) Priorité: 21.02.2020 FR 2001744
(71) Demandeur: ALSTOM Transport Technologies, 93400 Saint-Ouen (FR)
(72) Inventeur: NOE, Ludovic, 59700 Marcq-en-Baroeul (FR)
(74) Mandataire: Lavoix

(57) **Abrégé**

Dispositif (10) de maintien destiné à maintenir au moins un élément allongé dans un logement longitudinal ménagé dans une structure, la structure présentant en outre une fente d'accès au logement.

Le dispositif (10) comprend :
- une partie de manipulation (30), conformée pour permettre une mise en place du dispositif (10) dans le logement et une fixation du dispositif (10) par encliquetage en travers de la fente ; et
- une partie de maintien (32), propre à maintenir chaque élément allongé dans le logement.

La partie de maintien est conformée pour venir en appui contre au moins une portion de chaque élément allongé et pour maintenir chaque élément allongé en appui contre un fond du logement.

## Description

La présente invention concerne un dispositif de maintien destiné à maintenir au moins un élément allongé dans un logement longitudinal s'étendant selon une direction longitudinale, et ménagé dans une structure, la structure présentant en outre une fente d'accès au logement,
le dispositif comprenant :
- une partie de manipulation, conformée pour permettre une mise en place du dispositif dans le logement selon une direction d'insertion sensiblement perpendiculaire à la direction longitudinale, et une fixation du dispositif par encliquetage en travers de la fente ; et
- une partie de maintien, propre à maintenir chaque élément allongé dans le logement.

L'invention concerne également un ensemble comprenant ce dispositif et un procédé de fixation mettant en oeuvre ce dispositif.

Un tel dispositif de maintien est employé pour fixer des éléments allongés, notamment des câbles, dans un rail d'une structure métallique, par exemple une caisse de véhicule.

La réalisation de structures en profilés métalliques permet d'obtenir des structures simples à assembler, modulables, et relativement légères tout en gardant une robustesse satisfaisante.

Ces profilés définissent généralement des rails en C, destinés à recevoir des boulons (ensembles de vis-écrou) participant à l'assemblage de la structure.

Le terme de rail en C désigne généralement un logement longitudinal présentant une section sensiblement rectangulaire, réalisé par un évidement dans le profilé. Le rail en C présente une fente d'accès dont la largeur transversale est plus faible que la largeur du logement, afin de permettre le serrage des vis.

Il est connu d'utiliser ces rails pour d'autres applications, notamment comme logement pour des éléments allongés, tels des câbles électriques, afin de les guider et de les protéger. Ces éléments allongés doivent être maintenus dans le rail en C, pour éviter qu'ils en sortent sous l'effet, par exemple, des vibrations transmises par la structure.

Pour ce faire, on a recours à des dispositifs de maintien des éléments allongé dans le rail en C. Ces dispositifs présentent une forme de bague rectangulaire en matériau élastique, présentant une ouverture dans la partie inférieure pour introduire le ou les éléments allongés dans la bague. La bague rectangulaire présente des faces externes latérales munies de dents, pour fixer la bague dans le rail par encliquetage.

Cependant, ces dispositifs ne donnent pas entière satisfaction.

En effet, la manipulation de ces dispositifs est relativement complexe, notamment lorsque plusieurs câbles doivent être insérés dans la bague, puis que celle-ci doit être introduite dans le rail en C.

De plus, la largeur transverse de la bague est limitée par la largeur de la fente d'accès au rail en C, ce qui limite le nombre de câbles fixables par le dispositif de maintien.

Notamment, ce type de dispositif n'est utilisé que pour des rails de type M8, c'est-à-dire dont la fente d'accès présente une largeur proche de 8 millimètres, destinées à accueillir des vis dont la partie filetée présente un diamètre de l'ordre de 8 millimètres.

Les dispositifs de ce type ne sont pas adaptés aux rails de plus petite dimension, comme par exemple les rails M6, pourtant d'utilisation fréquente dans les structures en profilés.

Un but de l'invention est ainsi de fournir un dispositif de maintien permettant la fixation d'un grand nombre de câbles dans un rail de petite dimension, permettant une mise en place simple et rapide.

A cet effet, l'invention a pour objet un dispositif de maintien destiné à maintenir au moins un élément allongé dans un logement longitudinal s'étendant selon une direction longitudinale, et ménagé dans une structure, la structure présentant en outre une fente d'accès au logement,
le dispositif comprenant :
- une partie de manipulation, conformée pour permettre une mise en place du dispositif dans le logement selon une direction d'insertion sensiblement perpendiculaire à la direction longitudinale, et une fixation du dispositif par encliquetage en travers de la fente ; et
- une partie de maintien, propre à maintenir chaque élément allongé dans le logement,
dans lequel la partie de maintien est conformée pour venir en appui contre au moins une portion de chaque élément allongé et pour maintenir chaque élément allongé en appui contre un fond du logement, la partie de maintien étant déformable élastiquement selon une direction transversale et selon la direction d'insertion, la direction transversale étant sensiblement perpendiculaire à la direction longitudinale et à la direction d'insertion.

Un tel dispositif est plus simple à manipuler car il ne nécessite pas l'insertion simultanée du dispositif et de l'ensemble des éléments allongés dans le logement. De plus, il peut être employé pour fixer des éléments allongés dans des logements de plus petite dimension que les dispositifs de l'état de la technique.

Selon des modes de réalisation particuliers, le dispositif selon l'invention présente l'une ou plusieurs des caractéristiques suivantes, prise(s) isolément ou selon toute combinaison techniquement réalisable :
- la partie de manipulation comprend deux nervures faisant saillie de part et d'autre du dispositif, les nervures étant agencées pour venir en appui contre des bords de la fente, à l'intérieur du logement,
- la partie de manipulation comprend une protubérance présentant une largeur transversale plus importante qu'une largeur transversale de la fente, la protubérance étant agencée pour venir en appui contre des bords de la fente, à l'extérieur du logement,
- la protubérance présente une surface d'appui s'étendant d'un côté de la protubérance opposé à la partie de maintien, la surface d'appui étant destinée à recevoir un appui externe afin de mettre en place le dispositif dans la fente,
- la partie de maintien comprend un corps creux cylindrique agencé pour s'étendre dans le logement, ledit corps creux s'étendant autour d'un axe du corps creux cylindrique, l'axe du corps creux étant destiné à être orienté parallèlement à la fente,,
- le corps creux comprend une paroi latérale présentant une épaisseur sensiblement constante, l'épaisseur de la paroi latérale étant inférieure ou égale à 2 mm, et
- le dispositif de maintien est réalisé d'une seule pièce à partir d'un matériau déformable élastiquement, notamment du caoutchouc.

L'invention a également pour objet un ensemble comprenant une structure, au moins un élément allongé et un dispositif de maintien tel que décrit plus haut,
la structure comprenant un logement longitudinal et une fente d'accès au logement, au moins une portion de chaque élément allongé s'étendant dans le logement, le dispositif de maintien étant en appui contre la portion de chaque élément allongé et maintenant chaque élément allongé en appui contre un fond du logement.

Selon un mode de réalisation particulier, l'ensemble selon l'invention présente la caractéristique suivante :
- la structure est un profilé métallique, le logement et la fente formant un rail en C, la structure comprenant deux bords parallèles l'un à l'autre définissant la fente, les bords étant séparés l'un de l'autre par une distance strictement inférieure à 8 mm, notamment comprise entre 5 mm et 7 mm.

L'invention a en outre pour objet un procédé de fixation d'au moins un élément allongé dans un logement longitudinal ménagé dans une structure s'étendant selon une direction longitudinale, la structure présentant de plus une fente d'accès au logement, le procédé comprenant les étapes suivantes :
- fourniture d'au moins un élément allongé et d'un dispositif tel que décrit plus haut,
- insertion d'au moins une portion de chaque élément allongé dans le logement, à travers la fente,
- mise en place du dispositif dans le logement selon une direction d'insertion sensiblement perpendiculaire à la direction longitudinale au moyen de la partie de manipulation,
- fixation du dispositif par encliquetage en travers de la fente au moyen de la partie de manipulation, et
- appui de la partie de maintien contre au moins une portion de chaque élément allongé et maintien des éléments allongés en appui contre un fond du logement, la partie de maintien étant déformable élastiquement selon une direction transversale et selon la direction d'insertion, la direction transversale étant sensiblement perpendiculaire à la direction longitudinale et à la direction d'insertion.

L'invention sera mieux comprise à la lecture de la description qui va suivre, donnée uniquement à titre d'exemple non limitatif et faite en se référant aux dessins annexés, parmi lesquels :
- [Fig 1] la figure 1 est une vue en perspective d'un dispositif selon un exemple de mode de réalisation de l'invention ; et
- [Fig 2] la figure 2 est une vue en coupe transversale d'un ensemble comprenant le dispositif de la figure 1.

Dans la présente description, les termes « sensiblement parallèle », « sensiblement perpendiculaire » et « sensiblement orienté », signifient respectivement parallèle, perpendiculaire et orienté avec une marge angulaire inférieure à 10°, avantageusement inférieure à 5°.

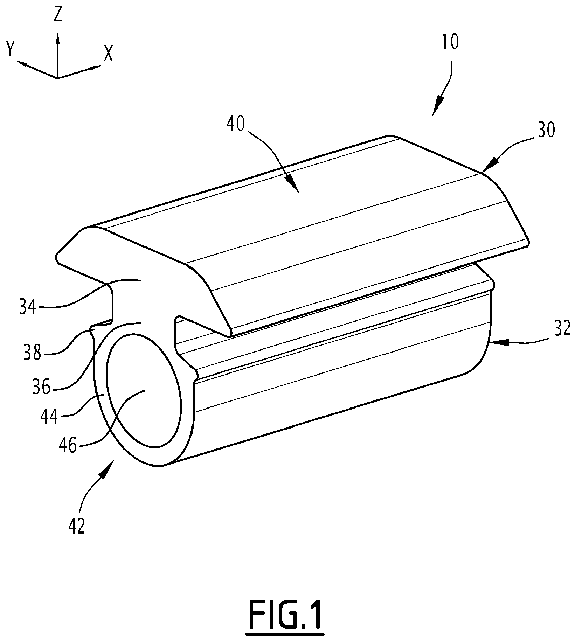

Un dispositif de maintien 10 selon l'invention est représenté sur la figure 1.

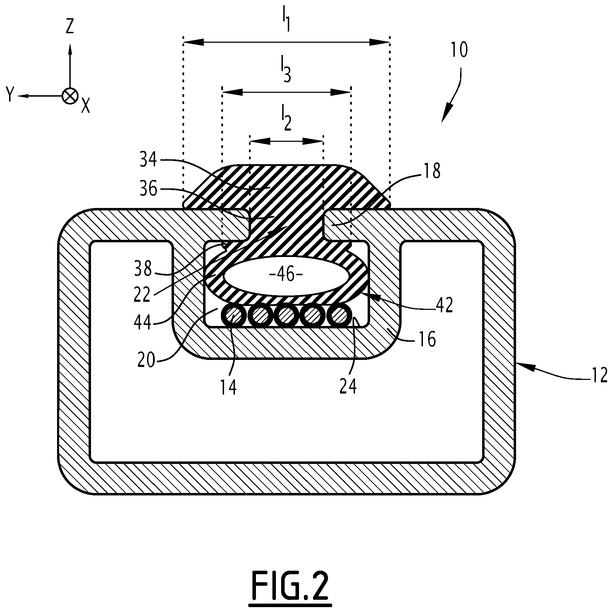

Comme représenté sur la figure 2, le dispositif de maintien 10 est destiné à maintenir au moins un élément allongé dans un logement longitudinal défini par une structure.

Le dispositif de maintien 10 est décrit relativement à une direction longitudinale X, une direction transversale Y et une direction d'insertion Z, représentées sur les figures 1 et 2.

La direction longitudinale X, la direction transversale Y et la direction d'insertion Z sont perpendiculaires les unes aux autres.

Un ensemble comprenant le dispositif de maintien 10, une structure 12 et une pluralité d'éléments allongés 14 est représenté sur la figure 2.

La structure 12 est un profilé, réalisé à partir d'un matériau métallique léger, comme par exemple l'aluminium ou un alliage d'aluminium.

La structure 12 fait par exemple partie d'une structure de véhicule, notamment de véhicule ferroviaire ou routier.

La structure 12 comprend une paroi interne 16 et deux bords 18, qui définissent un rail en C.

Le rail en C comprend un logement 20 longitudinal s'étendant en regard de la paroi interne 16 et une fente 22 d'accès au logement 20 définie entre les deux bords 18.

Le logement 20 longitudinal et la fente 22 s'étendent selon la direction longitudinale X.

Le logement 20 présente une section transverse sensiblement rectangulaire, dans un plan transverse YZ orthogonal à la direction longitudinale X.

Le rail en C est de préférence un rail de type M6, c'est-à-dire que le logement 20 est adapté pour recevoir une tête de vis, une partie filetée de la vis s'étendant à travers la fente 22, la partie filetée présentant un diamètre externe inférieur ou égal à 6 mm.

Le logement 20 est également apte à recevoir les éléments allongés 14, notamment des câbles.

Le logement 20 comprend un fond 24, s'étendant du côté opposé à la fente 22, à l'écart de la fente 22 selon la direction d'insertion Z.

La fente 22 est ménagée dans la structure 12 et débouche dans le logement 20, selon la direction d'insertion Z.

La fente 22 est définie par les deux bords 18 opposés, parallèles l'un à l'autre, séparés par une distance non nulle.

La distance séparant les bords 18, mesurée selon la direction transversale Y, est de préférence strictement inférieure à 8 mm, par exemple comprise entre 5 mm et 7 mm, notamment sensiblement égale à 6 mm.

Les éléments allongés 14 sont des câbles, tels que des câbles électriques d'alimentation et/ou de transfert de données.

Chaque élément allongé 14 présente une section dans le plan transverse XZ dont l'aire est par exemple comprise entre 1 mm² et 2 mm².

Le logement 20 reçoit notamment jusqu'à six éléments allongés 14 simultanément, ainsi que le dispositif de maintien 10.

Le dispositif de maintien 10, représenté en détail sur la figure 1, comprend une partie de manipulation 30 et une partie de maintien 32, disposées l'une au-dessus de l'autre selon la direction d'insertion Z.

Le dispositif de maintien 10 présente une forme allongée selon la direction longitudinale X.

Le dispositif de maintien 10 présente par exemple une longueur, mesurée selon la direction longitudinale X, comprise entre 10 mm et 30 mm, notamment sensiblement égale à 20 mm.

La section du dispositif de maintien 10, dans tout plan parallèle au plan transverse YZ, est de préférence identique sur l'ensemble de la longueur du dispositif de maintien 10.

Le dispositif de maintien 10 est sensiblement symétrique par rapport à un plan médian XZ orthogonal à la direction transversale Y.

Le dispositif de maintien 10 est par exemple réalisé d'une seule pièce à partir d'un matériau élastique.

Par les expressions « matériau élastique » ou « matériau déformable élastiquement », on entend un matériau présentant un module élastique suffisamment faible, notamment en compression et en flexion, pour permettre de le déformer manuellement de manière substantielle, c'est-à-dire par exemple avec un taux de déformation de l'ordre de 10%, tout en conservant un comportement mécanique élastique, c'est-à-dire se déformant de manière réversible.

Par exemple, un matériau élastique présente module d'Young inférieur à 1GPa, et notamment inférieur ou égal à 0,1 GPa.

Le dispositif de maintien 10 est par exemple réalisé par découpe dans du caoutchouc.

En variante, le dispositif de maintien 10 est réalisé par moulage.

La partie de manipulation 30 est la partie supérieure du dispositif de maintien 10 relativement à la direction d'insertion Z, propre à permettre la mise en place et la fixation du dispositif de maintien 10 dans le logement.

La partie de manipulation comprend une protubérance 34 supérieure, un membre vertical 36 s'étendant sous la protubérance, et deux nervures 38 faisant saillie de part et d'autre du membre vertical 36.

La protubérance 34 présente une section sensiblement trapézoïdale, dans le plan transverse YZ, comprenant un petit côté supérieur et un grand côté inférieur, relativement à la direction d'insertion Z.

La protubérance 34 est adaptée pour servir de poignée de manipulation du dispositif de maintien 10 lors de sa mise en place.

Avantageusement, la protubérance 34 définit une surface d'appui 40 destinée à recevoir un appui externe, notamment manuel, pour l'insertion du dispositif de maintien 10 dans le logement.

La surface d'appui 40 s'étend du côté de la protubérance 34 opposé à la partie de maintien 32.

Comme représenté sur la figure 2, la protubérance 34 est agencée pour venir en appui contre les bords 18 de la fente 22, à l'extérieur du logement 20.

La protubérance 34 présente une première largeur l₁, mesurée selon la direction transversale Y sur le grand côté de la section.

La première longueur l₁ est supérieure à la distance séparant les bords de la fente, par exemple comprise entre 8 mm et 15 mm.

Le membre vertical 36 est une partie allongée selon la direction d'insertion Z, reliant la protubérance 34 à la partie de maintien 32.

Le membre vertical 36 présente une deuxième largeur l₂, mesurée selon la direction transversale Y, inférieure à la distance séparant les bords 18 de la fente 22, par exemple inférieure ou égale à 6 mm.

Les nervures 38 sont des reliefs s'étendant sur les bords latéraux du membre vertical 36 et de la partie de maintien 32, et faisant saille sensiblement selon la direction transversale Y.

Comme représenté sur la figure 2, les nervures 38 sont agencées pour venir en appui contre les bords 18 de la fente 22, à l'intérieur du logement 20.

Ainsi, la protubérance 34 et les nervures 38 coopèrent pour fixer le dispositif de maintien 10 dans le logement 20, par encliquetage dans la fente 22.

Chaque nervure 38 présente une section sensiblement triangulaire dans le plan transverse YZ, et présente un sommet à l'écart du membre vertical 36 selon la direction transversale Y.

Les nervures 38 définissent une troisième largeur l₃, mesurée selon la direction transversale Y entre les sommets des nervures 38, supérieure à la distance séparant les bords 18 de la fente 22, par exemple comprise entre 7 mm et 10 mm.

La partie de maintien 32 est la partie inférieure du dispositif de maintien 10 relativement à la direction d'insertion Z, et cette partie de maintien 32 est propre à maintenir le ou les éléments allongés 14 dans le logement 20.

La partie de maintien 32 est aisément déformable et présente un comportement mécanique élastique. Par exemple, la partie de maintien 32 est déformable élastiquement selon la direction transversale Y et/ou selon la direction d'insertion Z.

La partie de maintien 32 est configurée pour venir en appui contre une portion de chaque élément allongé 14, de manière à maintenir la portion de l'élément allongé 14 en appui contre le fond 24 du logement 20.

Par exemple, la partie de maintien 32 comprend un corps creux 42 agencé pour s'étendre dans le logement 20.

Le corps creux 42 est cylindrique et s'étend autour d'un axe sensiblement parallèle à la direction longitudinale X, parallèlement à la fente 22.

Le corps creux 42 comprend une paroi latérale 44 présentant une épaisseur sensiblement constante sur la périphérie du corps creux 42, définissant un conduit interne 46 vide sensiblement cylindrique.

L'épaisseur de la paroi latérale 44 est notamment inférieure ou égale à 2 mm.

Ainsi, le corps creux 42 est facilement déformable selon la direction transversale Y et selon la direction d'insertion Z.

Le corps creux 42 peut ainsi d'une part être facilement inséré dans le logement 20 à travers la fente 22, et d'autre part exercer un appui sur les éléments allongés 14 s'étendant contre le fond 24 du logement 20.

En variante, le corps creux 42 comprend un élément poreux, par exemple un cylindre réalisé à partir d'un matériau polymère sous forme de mousse.

Un procédé de fixation de fixation des éléments allongés 14 dans le logement 20 longitudinal défini par la structure 12 va maintenant être décrit.

Le procédé comprend une étape préliminaire de fourniture d'au moins un élément allongé 14 et du dispositif de maintien 10 tel que décrit précédemment.

Le procédé comprend une étape d'insertion d'au moins une portion de chaque élément allongé 14 dans le logement 20, à travers la fente 22.

La portion de chaque élément allongé 14 est insérée dans le logement 20 manuellement par un opérateur, indépendamment des autres éléments allongés 14. La portion insérée a généralement une longueur au moins égale à la longueur du dispositif de maintien 10, mesurée selon la direction longitudinale X.

Le procédé comprend ensuite une étape de mise en place du dispositif de maintien 10 dans le logement 20. Le dispositif de maintien 10 est manipulé manuellement par l'opérateur au moyen de la partie de manipulation 30.

Le dispositif de maintien 10 est mis en place avec la partie de maintien 32 contre la fente 22, et l'opérateur appuie sur la surface d'appui 40 pour déformer la partie de maintien 32 et la faire entrer dans le logement 20.

Le procédé comprend alors une étape de fixation du dispositif de maintien 10 par encliquetage en travers de la fente 22 au moyen de la partie de manipulation 30.

Le dispositif de maintien 10 est incliné par rapport à la structure 12 de manière à faire pénétrer une des nervures 38 dans le logement 20 et la placer en appui contre un des bords 18 de la fente 22, depuis l'intérieur du logement 20.

Puis, l'opérateur exerce une poussée sur la surface d'appui 40 pour faire pénétrer la deuxième nervure 38 dans le logement 20.

Les nervures 38 viennent en appui contre les bords 18 de la fente 22 depuis l'intérieure du logement 20 et la protubérance 34 vient en appui contre les bords 18 de la fente 20, depuis l'extérieur du logement 20, ce qui fixe le dispositif de maintien 10 par encliquetage.

Le procédé comprend alors une étape d'appui de la partie de maintien 32 contre la portion de chaque élément allongé 14 insérée dans le logement 20, et de maintien des éléments allongé 14 en appui contre le fond 24 du logement 20.

La fixation des éléments allongés 14 par appui est maintenue tant que le dispositif de maintien 10 reste engagé dans le logement 20, jusqu'à son retrait par un opérateur.

Le dispositif de maintien 10 décrit permet la fixation d'un grand nombre de câbles dans un rail en C de petite dimension, selon un procédé de mise en place simple et rapide.

Par exemple, il permet de fixer rapidement et simplement jusqu'à six câbles de section voisine de 1,5 mm² dans un rail en C de type M6. Cela est particulièrement avantageux, puisque les rails M6 sont fréquents dans les structures en profilé métallique.

Il est possible de fixer plusieurs dispositifs 10 identiques à intervalles réguliers dans le logement 20, lorsque la structure 12 présente une élongation importante selon la direction longitudinale X, pour améliorer la fixation des éléments allongés 14.

De plus, le dispositif de maintien 10 est plus léger et nécessite moins de matériau pour sa fabrication que les dispositifs de l'état de la technique.

Enfin, le dispositif de maintien 10 peut servir de support pour un organe de fixation engagé dans le rail, comme par exemple une vis ou un écrou, permettant de le bloquer selon la direction longitudinale X. Cela est particulièrement utile pour des profilés dans lequel le rail en C s'étend sensiblement verticalement, en permettant de faciliter l'assemblage de la structure.

## Revendications

1. Dispositif (10) de maintien destiné à maintenir au moins un élément allongé (14) dans un logement (20) longitudinal s'étendant selon une direction longitudinale (L), et ménagé dans une structure (12), la structure (12) présentant en outre une fente (22) d'accès au logement (20),
le dispositif (10) comprenant :
- une partie de manipulation (30), conformée pour permettre une mise en place du dispositif (10) dans le logement (20) selon une direction d'insertion (Z) sensiblement perpendiculaire à la direction longitudinale (L) et une fixation du dispositif (10) par encliquetage en travers de la fente (22) ; et
- une partie de maintien (32), propre à maintenir chaque élément allongé (14) dans le logement (20),
**caractérisé en ce que** la partie de maintien (32) est conformée pour venir en appui contre au moins une portion de chaque élément allongé (14) et pour maintenir chaque élément allongé (14) en appui contre un fond (24) du logement (20), la partie de maintien (32) étant déformable élastiquement selon une direction transversale (Y) et selon la direction d'insertion (Z), la direction transversale (Y) étant sensiblement perpendiculaire à la direction longitudinale (L) et à la direction d'insertion (Z).

2. Dispositif (10) selon la revendication 1, dans lequel la partie de manipulation (30) comprend deux nervures (38) faisant saillie de part et d'autre du dispositif (10), les nervures (38) étant agencées pour venir en appui contre des bords (18) de la fente (22), à l'intérieur du logement (20).

3. Dispositif (10) selon la revendication 1 ou 2, dans lequel la partie de manipulation (30) comprend une protubérance (34) présentant une largeur transversale (l₁) plus importante qu'une largeur transversale de la fente (22), la protubérance (34) étant agencée pour venir en appui contre des bords (18) de la fente (22), à l'extérieur du logement (20).

4. Dispositif (10) selon la revendication 3, dans lequel la protubérance (34) présente une surface d'appui (40) s'étendant d'un côté de la protubérance (34) opposé à la partie de maintien (32), la surface d'appui (40) étant destinée à recevoir un appui externe afin de mettre en place le dispositif (10) dans la fente (22).

5. Dispositif (10) selon l'une quelconque des revendications 1 à 4, dans lequel la partie de maintien (32) comprend un corps creux (42) cylindrique agencé pour s'étendre dans le logement (20), ledit corps creux (42) s'étendant autour d'un axe du corps creux (42) cylindrique, l'axe du corps creux (42) étant destiné à être orienté parallèlement à la fente (22).

6. Dispositif (10) selon la revendications 5, dans lequel le corps creux comprend une paroi latérale (44) présentant une épaisseur sensiblement constante, l'épaisseur de la paroi latérale (44) étant inférieure ou égale à 2 mm.

7. Dispositif (10) selon l'une quelconque des revendications 1 à 6, dans lequel dans lequel le dispositif de maintien (10) est réalisé d'une seule pièce à partir d'un matériau déformable élastiquement, notamment du caoutchouc.

8. Ensemble comprenant une structure (12), au moins un élément allongé (14) et un dispositif de maintien (10) selon l'une quelconque des revendications 1 à 7,
la structure (12) comprenant un logement (20) longitudinal et une fente (22) d'accès au logement (20), au moins une portion de chaque élément allongé (14) s'étendant dans le logement (20), le dispositif de maintien (10) étant en appui contre la portion de chaque élément allongé (14) et maintenant chaque élément allongé (14) en appui contre un fond (24) du logement (20).

9. Ensemble selon la revendication 8, dans lequel la structure (12) est un profilé métallique, le logement (20) et la fente (22) formant un rail en C, la structure (12) comprenant deux bord (18) parallèles l'un à l'autre définissant la fente (22), les bords (18) étant séparés l'un de l'autre par une distance strictement inférieure à 8 mm, notamment comprise entre 5 mm et 7 mm.

10. Procédé de fixation d'au moins un élément allongé (14) dans un logement (20) longitudinal ménagé dans une structure (12) s'étendant selon une direction longitudinale (L), la structure (12) présentant de plus une fente (22) d'accès au logement (20), le procédé comprenant les étapes suivantes :
- fourniture d'au moins un élément allongé (14) et d'un dispositif (10) selon l'une quelconque des revendications 1 à 7,
- insertion d'au moins une portion de chaque élément allongé (14) dans le logement (20), à travers la fente (22),
- mise en place du dispositif (10) dans le logement (20) selon une direction d'insertion (Z) sensiblement perpendiculaire à la direction longitudinale (L) au moyen de la partie de manipulation (30),
- fixation du dispositif (10) par encliquetage en travers de la fente (22) au moyen de la partie de manipulation (30), et
- appui de la partie de maintien (32) contre au moins une portion de chaque élément allongé (14) et maintien des éléments allongés (14) en appui contre un fond (24) du logement (20), la partie de maintien (32) étant déformable élastiquement selon une direction transversale (Y) et selon la direction d'insertion (Z), la direction transversale (Y) étant sensiblement perpendiculaire à la direction longitudinale (L) et à la direction d'insertion (Z).
